# EUROPEAN PATENT APPLICATION

(11) **EP 4 654 065 A1**
(43) Date of publication of application: **26.11.2025**
(21) Application number: 25172814.3
(22) Date of filing: 28.04.2025
(51) Int. Cl.: G06F 30/18, G06F 30/20, G06F 30/27, G06F 30/13, G06F 113/14

(54) **SYSTEMS AND METHODS OF IMPLEMENTING ARTIFICIAL INTELLIGENCE GENERATED THREE-DIMENSIONAL PIPING ROUTES**

(30) Priority: 22.05.2024 US 202418671472
(71) Applicant: GE Vernova Technology GmbH, 5400 Baden (CH)
(72) Inventor: PEREZ, Jesus Barrera, 76146 Queretaro (MX); BONNET, Vincent Jacques, 76146 Queretaro (MX)
(74) Representative: Openshaw & Co.

(57) **Abstract**

A system (116) includes a processing circuitry (212) and a memory (122), accessible by the processing circuitry (212), the memory (122) storing instructions that, when executed by the processing circuitry (212) cause the processing circuitry (212) to perform operation including receiving one or more route criteria (244) and identifying a number of pipes, wherein the number of pipes is based on the one or more route criteria (244). The piping also includes generating a vector route (402), storing the vector route (402), generating a limiting zone (422), and performing an iterative process including determining one or more vector routes (402) for each of the identified number of pipes. Further, the piping system (116) also includes optimizing a route solution based on the one or more vector routes (402) based on an optimization parameter and outputting a three-dimensional pipe layout (242), wherein the three-dimensional pipe layout (242) is transmitted to an external platform for display via a user interface (208).

## Description

### TECHNICAL FIELD

The subject matter disclosed herein relates to a piping system and, more particularly, systems and methods for generation of a three-dimensional (3-D) piping route for use within an electrical power generation system.

### BACKGROUND

An industrial plant may produce a variety of products that may include gases (e.g., steam, exhaust gas) and/or liquids (e.g., water, oils, fuels). Production of the variety of products includes movement of the variety of products throughout the industrial plant including complex piping routes. It is currently known that design, implementation, and operation of complex piping routes may be cumbersome. Multiple factors may require repetitive need for user redesign of piping routes during design of industrial plants that may lead to non-optimized piping routes, thereby increasing design time, implementation cost, and/or operational efficiency. Accordingly, a need exists for streamlined design and implementation of piping systems within industrial plants (e.g., plants used for electrical power generation).

### BRIEF DESCRIPTION

Certain embodiments commensurate in scope with the originally claimed subject matter are summarized below. These embodiments are not intended to limit the scope of the claimed embodiments, but rather these embodiments are intended only to provide a brief summary of possible forms of the subject matter. Indeed, the presently claimed embodiments may encompass a variety of forms that may be similar to or different from the embodiments set forth below.

In certain embodiments, a piping design system includes a processing circuitry and a memory, accessible by the processing circuitry, the memory storing instructions that, when executed by the processing circuitry, cause the processing circuitry to perform operations including receiving one or more route criteria and identifying a number of pipes, wherein the number of pipes is based on the one or more route criteria. The operations also include generating a vector route, storing the vector route, generating a limiting zone, and performing an iterative process including determining one or more vector routes for each of the identified number of pipes. Further, the piping design system also includes instructions for optimizing a route solution based on the one or more vector routes based on an optimization parameter and outputting a three-dimensional pipe layout; wherein the three-dimensional pipe layout is transmitted to an external platform for display via a user interface.

In certain embodiments, a method includes generating a three-dimensional pipe layout and outputting the three-dimensional pipe layout, and building a real-world piping layout based on the three-dimensional pipe layout.

In certain embodiments, a non-transitory, computer-readable storage medium includes processor-executable routines that, when executed by a processor, cause the processor to perform operations. The processor performs operations including receiving one or more route criteria, identifying a number of pipes, initiating a vector routing model, and generating one or more vector routes formed by the vector routing model. The processor also performs operations including monitoring a vector direction of the one or more vector routes, storing the one or more vector routes, generating a limiting zone, performing an iterative process, optimizing a route solution based on the one or more vector routes, and outputting a three-dimensional pipe layout.

### BRIEF DESCRIPTION OF THE DRAWINGS

These and other features, aspects, and advantages of the presently disclosed techniques will become better understood when the following detailed description is read with reference to the accompanying drawings in which like characters represent like parts throughout the drawings, wherein:
FIG. 1 is a block diagram of an embodiment of an industrial plant (e.g., a power plant configured for electrical power generation), in accordance with embodiments described herein;
FIG. 2 is a block diagram of example components of a computer system of the piping design system, in accordance with embodiments described herein;
FIG. 3 is a flow diagram of an embodiment of the piping design system including a method for producing a 3-D pipe layout in accordance with embodiments described herein;
FIG. 4 is an embodiment of a user interface of the piping system in accordance with embodiments described herein;
FIG. 5 is an embodiment of a scale increasing model to train a vector routing model of the piping design system in accordance with embodiments described herein;
FIG. 6 is a flow diagram of an embodiment of the vector routing model of the piping design system in accordance with embodiments described herein;
FIG. 7 is an embodiment of the vector routing model of the piping design system in accordance with embodiments described herein;
FIG. 8 is a flow diagram of a process of the vector routing model of the piping design system in accordance with embodiments described herein; and
FIG. 9 is a flow diagram of an embodiment of a process of the piping design system in accordance with embodiments described herein.

### DETAILED DESCRIPTION

One or more specific embodiments of the presently disclosed systems and methods are described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the presently disclosed embodiments, the articles "a," "an," "the," and "said" are intended to mean that there are one or more of the elements. The terms "comprising," "including," and "having" are intended to be inclusive and mean that there may be additional elements other than the listed elements.

An industrial plant (e.g., power production plants, chemical processing plants, oil refineries) may include generators, turbine systems, cooling systems, transformers, boilers, fuel tanks, and other components interconnected with a piping system. The piping system is designed to couple each component to allow generation of an industrial product (e.g., power, chemicals, oils, etc.). The piping system may include various piping routes to transport fluids, gases, and other streams for use in industrial processes. The design and implementation of the piping system may dictate an efficiency, a safety, and a practicality of the industrial plant. It is currently known that design of efficient, safe and practical piping systems for industrial systems is complex and burdensome due to complexity of pipe route criteria (e.g., start point, end point, limiting zone, work volume boundary, pipe properties, valves, fittings). For example, direct connection (e.g., piping route from a start point to an end point) of a steam pipe route may intersect with a cooling water pipe route and require decisions of priority relating to various pipes to satisfy pipe route criteria and create an optimized route. Selection of the optimized route (e.g., efficient route, safe route, practical route) includes consideration of various factors (e.g., pressure drops, flow optimization, material specifications, etc.). As such, there is a need for generation of a three-dimensional (3-D) piping layout that considers pipe route criteria to provide optimized piping systems for industrial plant implementation.

As such, embodiments of the present disclosure relate to generation of a three-dimensional (3-D) pipe layout. The 3-D pipe layout is generated through implementation of artificial intelligence (AI) driven training and modeling of a piping system. In some embodiments, a scale increasing model (e.g., AI model) may be trained with training data to provide a vector routing model (e.g., model informed by the trained scale increasing model). The pipe criteria (e.g., start point, end point, limiting zone, work volume boundary, pipe properties, and the like) are provided to the scale increasing model to initiate training through randomized vector creation. After training, the vector routing model is used to generate the 3-D pipe layout based on the various route criteria input by a user on a user interface. The vector routing model evaluates the 3-D pipe layout, iteratively updates the 3-D pipe layout to optimize various vector routes (e.g., pipe routes of each pipe in the piping system), and provides an optimized 3-D pipe layout for implementation in the industrial plant. In this manner, the scale increasing model and the vector routing model reduce the complexity and burden of piping system design and optimization, improving industrial plant piping layout and efficiency.

In certain embodiments, the 3-D pipe layout generated by the vector routing model is used to generate construction plans for building the 3-D pipe layout in the industrial plant. Additionally, during or after construction, the vector routing model may update the 3-D pipe layout based on feedback during construction (e.g., feedback indicating construction issues with building the 3-D pipe layout), feedback during operation of the industrial plant (e.g., sensor feedback indicating performance issues with the 3-D pipe layout), or any combination thereof, in an iterative manner to improve the 3-D pipe layout. In some embodiments, the vector routing model may iteratively update the 3-D pipe layout based on feedback (e.g., construction, operation, etc.) from a plurality of industrial plants using the same or different 3-D pipe layouts generated by the vector routing model. In certain embodiments, a controller or control system of the industrial plant uses the 3-D pipe layout and/or the vector routing model for control of various equipment coupled to the 3-D pipe layout, fluid flows and operating parameters (e.g., temperatures, pressures, flow rates, fluid compositions, etc.) of fluids in the 3-D pipe layout, or any combination thereof, thereby improving control of the industrial plant.

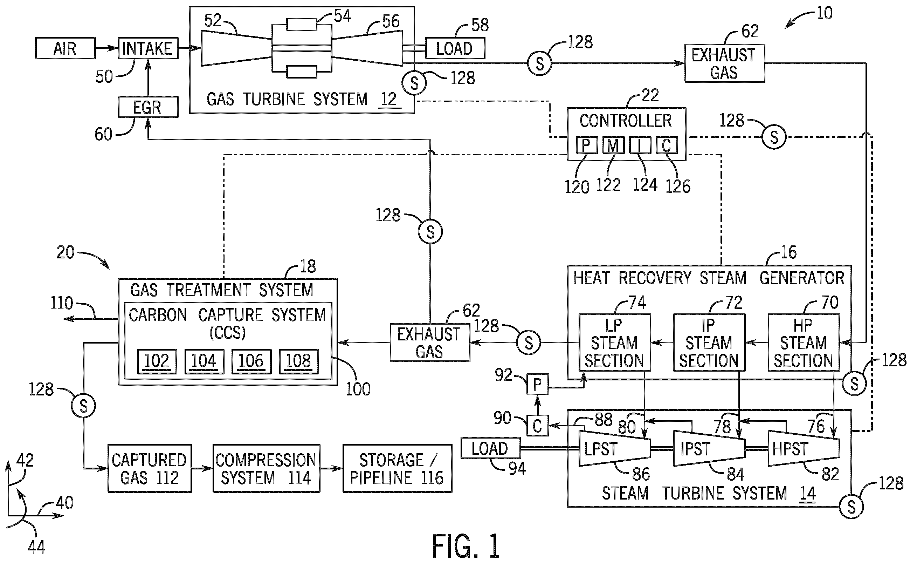

FIG. 1 is a block diagram of an embodiment of an industrial plant 10 having a gas turbine system 12, a steam turbine system 14, a heat recovery steam generator (HRSG) 16, a gas treatment system 18 having one or more gas capture systems 20, and a controller 22 coupled to each of the systems 12, 14, 16, and 18. As discussed below, the one or more gas capture systems 20 of the gas treatment system 18 are configured to capture an undesirable gas (e.g., CO₂) from exhaust gas and/or air (e.g., direct air capture). As discussed in detail below, the industrial plant 10 includes a variety of piping between and within the systems 12, 14, 16, and 18, including gas piping, liquid piping, or other piping, wherein the disclosed embodiments enable the generation and use of a 3-D pipe layout. Before discussing details of the gas treatment system 18, various aspects of the industrial plant 10 are discussed in further detail. For purposes of orientation in the drawings, reference may be made to an axial direction or axis 40, a radial direction or axis 42 extending radially away from the axial direction or axis 40, and a circumferential direction or axis 44 extending circumferentially around the axial direction or axis 40. The directions or axes 40, 42, and 44 may be in reference to a rotational axis of the gas turbine system 12, for example.

The gas turbine system 12 includes an air intake 50, a compressor 52 having one or more compressor stages, one or more combustors 54, a turbine 56 (e.g., an expansion turbine) having one or more turbine stages, and a load 58 (e.g., electrical generator) driven by the turbine 56. In certain embodiments, the gas turbine system 12 further includes an exhaust gas recirculation (EGR) system 60 configured to recirculate an exhaust gas 62 into the air intake 50. The recirculated exhaust gas 62 helps to reduce the temperature and formation of certain emissions (e.g., nitrogen oxides (NO_{X})) associated with combustion in the combustors 54. In operation, the compressor 52 receives air (and also exhaust gas 62 if the EGR system 60 is active) from the air intake 50, and compresses the air and/or exhaust gas 62 in one or more compressor stages (e.g., stages of rotating compressor blades). The combustors 54 then combust fuel from a fuel supply system with the compressed air and/or exhaust gas, and generate hot combustion gases. The hot combustion gases expand and drive one or more turbine stages (e.g., stages of rotating turbine blades) in the turbine 56, thereby driving rotation of the compressor 52 and the load 58 via shafts. The turbine 56 then outputs the hot combustion gases as the exhaust gas 62. The gas turbine system 12 may include a variety of piping to support the flow of intake air, compressed air (e.g., bleed air), one or more fuels (e.g., liquid fuel, gas fuel, etc.), additives for combustion, exhaust gas (e.g., exhaust gas recirculation), or other fluids. The piping of the gas turbine system 12 is an example of the 3-D piping layout discussed herein.

The HRSG 16 recovers waste heat from the exhaust gas 62 to generate steam for driving the steam turbine system 14. The HRSG 16 includes a high-pressure (HP) steam section 70, an intermediate-steam (IP) section 72, and a low-pressure (LP) steam section 74 configured to generate HP steam 76, IP steam 78, and LP steam 80. The steam turbine system 14 may include an HP steam turbine 82 driven by the HP steam 76, an IP steam turbine 84 driven by the IP steam 78, and a LP steam turbine 86 driven by the LP steam 80. In addition to the steam provided by the HRSG 16, the HP steam turbine 82 provides IP steam to the IP steam turbine 84, and the IP steam turbine 84 provides LP steam to the LP steam turbine 86. The LP steam turbine 86 then outputs any remaining steam/water to a condensate line 88 coupled to the LP steam section 74 of the HRSG 16. The condensate line 88 may include a condenser 90 configured to condense any remaining steam to form a condensate, and a pump 92 configured to pump the condensate back to the LP steam section 74. In operation, the steam turbine system 14 drives a load 94 (e.g., electrical generator) via a shaft.

In certain embodiments, the steam turbine system 14 and/or the HRSG 16 may provide heated water and/or steam (e.g., HP steam 76, IP steam 78, and/or LP steam 80) to the gas treatment system 18 to support a desorption mode of the one or more gas capture systems 20. For example, the gas capture systems 20 may receive heated water and/or steam in a temperature range of 100 to 150 degrees Celsius, 110 to 150 degrees Celsius, 120 to 150 degrees Celsius, or 130 to 150 degrees Celsius. The steam turbine system 14 and the HRSG 16 may include a variety of piping to support the flow of exhaust gas, steam, water, or other fluids, thereby facilitating waste heat recovery, steam generation, and steam power. The piping of the steam turbine system 14 and the piping of the HRSG 16 are further examples of the 3-D piping layout discussed herein.

After the HRSG 16, the exhaust gas 62 may flow to the EGR system 60 and/or the gas treatment system 18. In the illustrated embodiment, the exhaust gas 62 flows through one or more gas capture systems 20 configured to capture undesirable gases. The undesirable gases may include carbon oxides (CO_{X}) (e.g., carbon dioxide (CO₂) and carbon monoxide (CO)), nitrogen oxides (NO_{X}) (e.g., nitrogen dioxide (NO₂)), sulfur oxides (SO_{X}) (e.g., sulfur dioxide (SO₂)), or any combination thereof. In the following discussion, CO₂ may be used as an example of the undesirable gases; however, the gas capture systems 20 may be designed to capture any of the foregoing undesirable gases. For example, the gas capture systems 20 include one or more carbon capture systems 100 (e.g., CO₂ capture systems). The gas capture systems 20 (e.g., carbon capture systems 100) may include sorbent-based gas capture systems, solvent-based gas capture systems, cryogenic gas capture systems, or any combination thereof, configured to remove and capture undesirable gases. The carbon capture system 100 may include components 102, 104, 106, and 108 configured to enable gas capture of undesirable gases (e.g., CO₂) from the exhaust gas 62, thereby outputting a treated gas 110 and a captured gas 112 (e.g., CO₂). The treated gas 110 may be substantially free of the undesirable gases (e.g., CO₂) and may be discharged through an exhaust stack. The captured gas 112 (e.g., CO₂) may be compressed by a compression system 114 and stored and/or transported by a storage and/or pipeline system 116.

In certain embodiments, the carbon capture system 100 is a sorbent-based carbon capture system, and the components 102, 104, 106, and/or 108 include multiple sorbent-based carbon capture units (e.g., adsorbers). In certain embodiments, the carbon capture system 100 is a solvent-based carbon capture system, and the components 102, 104, 106, and/or 108 include one or more absorbers, strippers, and associated equipment. The carbon capture system 100 may include a variety of piping to support the flow of exhaust gas, air, steam, solvent, water, or other fluids, thereby facilitating carbon capture. The piping of the carbon capture system 100 is another example of the 3-D piping layout discussed herein.

In the illustrated embodiment, the controller 22 is configured to control all aspects of the industrial plant 10. The controller 22 includes one or more processors 120, memory 122, instructions 124 stored on the memory 122 and executable by the processor 120, and communication circuitry 126 configured to communicate with sensors and various equipment of the industrial plant 10. For example, the controller 22 is configured to receive sensor feedback from one or more sensors 128 coupled to the gas turbine system 12, the steam turbine system 14, the HRSG 16, and the gas treatment system 18 (e.g., gas capture systems 20), and/or additional components of the industrial plant 10 and to control the same equipment based on the sensor feedback, operating modes, user input, computer models, or any combination thereof. The sensors 128 may include temperature sensors, pressure sensors, flow rate sensors, gas composition sensors, or any combination thereof. In certain embodiments, the controller 22 is configured to control operation of the gas capture systems 20 (e.g., carbon capture systems 100), such by controlling modes of operation (e.g., adsorption mode, desorption mode, and cooling mode), controlling heat sources for supplying heated fluid (e.g., steam) to the gas capture systems 20, controlling cooling sources for supplying cooled fluids to the gas capture systems 20, or any combination thereof.

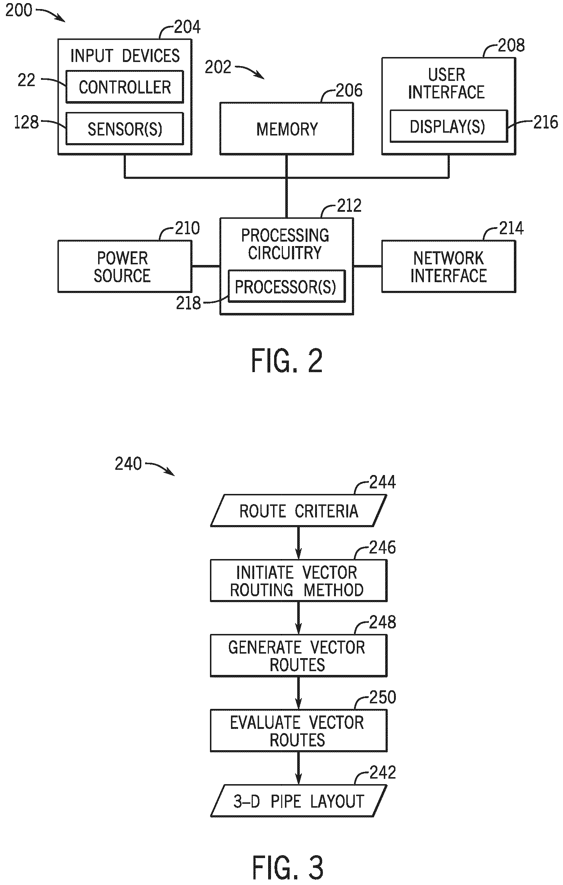

The controller 22 and/or the one or more sensors 128 of the industrial plant 10 may interface (e.g., input devices) with a piping design system 200 as shown in FIG. 2. The piping design system 200 may generate a 3-D pipe layout through using one or more processor-based systems such as shown in FIG. 2. Likewise, applications and/or databases utilized in the present approach may be stored, employed, and/or maintained on such processor-based systems. As may be appreciated, the piping design system 200 may be present in a distributed computing environment, a networked environment, or other multi-computer platform or architecture and may be used in supporting or communicating with one or more virtual environments or computational instances on which the present approach may be implemented.

With this in mind, an example computer system may include some or all of the computer components depicted in FIG. 2. FIG. 2 generally illustrates a block diagram of example components of a computing system 202 of the piping design system 200 and their potential interconnections or communication paths, such as along one or more busses. As illustrated, the computing system 202 may include various hardware components such as, but not limited to, input devices 204, memory 206, a user interface 208, a power source 210, a processing circuitry 212, a network interface 214, and/or other computer components useful in performing the functions described herein.

The input devices 204 correspond to structures to input data and/or commands to the processing circuitry 212. For example, the input devices 204 may include the controller 22 of the industrial plant 10, one or more sensors 128, and/or additional inputs (e.g., a mouse, touchpad, touchscreen, keyboard and the like). With respect to other components, the memory 206 of the piping design system 200 may also be used to store the data, various other software applications, and the like that are executed by the processing circuitry 212. The memory 206 may represent non-transitory computer-readable media (e.g., any suitable form of memory or storage) that may store the processor-executable code used by the processing circuitry 212 to perform various techniques described herein. The user interface 208 may include one or more displays 216 (e.g., light emitting diode (LED) display, organic light emitting diode (OLED) display, etc.) that may be configured to display text or images transferred to it from the one or more processors 218 via an external platform (e.g., dashboard, screen, display, etc.). In addition to and/or alternative to the display 216, the user interface 208 may include other devices for interfacing with a user, such as lights (e.g., LEDs), speakers, and the like. The power source 210 can be any suitable source for power of the various components of the computing system 202, such as line power and/or a battery source. The network interface 214 includes one or more transceivers capable of communicating with other devices over one or more networks (e.g., a communication channel).

The processing circuitry 212 may include one or more processors 218 that may include one or more microprocessors capable of performing instructions stored in the memory 206. Additionally, or alternatively, the one or more processors 218 may include application-specific integrated circuits (ASICs), field-programmable gate arrays (FPGAs), and/or other devices designed to perform some or all of the functions discussed herein without calling instructions from the memory 206. For example, the processing circuitry 212 may include one or more than one reduced instruction set (RISC) or complex instruction set (CISC) processors. In some embodiments, the processors 218 may receive inputs transmitted from the sensors 128 positioned of the industrial plant 10 and communicate with the computing system 202 via the input devices 204. For example, the sensors 128 may provide sensor feedback data indicative of a level of efficiency of a 3-D pipe layout implemented based on operation of an operational 3-D pipe layout using the piping design system 200. In some instances, the piping design system 200 may use the sensor data to update a second 3-D pipe layout based on sensor feedback data, and/or the piping design system 200 may iteratively update and improve the 3-D pipe layout based on the sensor data, user feedback, control system feedback, or any combination thereof, at the industrial plant 10 or a plurality of different industrial plants. In some embodiments, after implementation of the 3-D pipe layout in the industrial plant 10, the 3-D pipe layout may be modified in the piping design system 200 and subsequently modified in the industrial plant 10. Additionally, the 3-D pipe layout may be used by control systems (e.g., the controller 22) of the industrial plant 10, and the incorporation of the 3-D pipe layout may improve responsiveness, efficiency, and performance of the controller 22 and the entire industrial plant 10. The network interface 214 may provide a wired network interface or a wireless network interface.

FIG. 3 illustrates a flow diagram of a computer-implemented method 240 of the piping design system 200 in accordance with certain embodiments of the present disclosure. As shown, the computer-implemented method 240 generally produces a 3-D pipe layout 242 that can be displayed on a computer screen or monitor and/or that can be printed or saved onto non-transitory medium. In general, the computer-implemented method 240 receives one or more route criteria 244. In some embodiments, the route criteria 244 may include a start point, an end point, a pipe selection, a work volume boundary, one or more limiting zones, and/or a combination thereof. In some instances, the route criteria 244 are based on inputs of the user interface 208 (FIG. 2) of the piping design system 200. The start point and/or the end point may be defined based on connections of the industrial plant 10.

For example, the exhaust gas recirculation (EGR) system 60 configured to recirculate the exhaust gas 62 into the air intake 50 may include one or more pipes. The one or more pipes may include the start point originating from the exit end of the gas turbine system 12 (or the exit end of the HRSG 16) connected to the end point at the air intake 50. In this manner, the piping design system 200 may receive the route criteria 244 of the one or more pipes desired to be included in the 3-D pipe layout 242. The start point and/or the end point of the one or more pipes may include a portion of pipes, all pipes, or any suitable number of pipes within the industrial plant 10. By further example, the piping design system 200 may receive the route criteria 244 for fuel conduits for the combustors 54, compressor bleed conduits for the compressor 52, water and steam conduits for the steam turbine system 14 and the HRSG 16, conduits for the gas treatment system 18, or any combination thereof.

The route criteria 244 may include the pipe selection. The pipe selection may include a pipe size, a pipe schedule, a pipe material, and/or a combination thereof of the one or more pipes to be included in the 3-D pipe layout 242. In certain embodiments, the pipe selection may be input by a user via the user interface 208. The pipe size may include a nominal pipe size (e.g., based on diameter in inches, millimeters, or other suitable units). The pipe schedule may include a wall thickness of the one or more pipes. In some instances, the pipe size and/or the pipe schedule may change within a particular pipe route. With this in mind, the piping design system 200 may divide the particular pipe route into one or more additional pipe routes containing one pipe size and/or pipe schedule. For example, in some instances, the steam turbine system 14 may provide heated water to the gas treatment system 18 via the particular pipe route. The particular pipe connecting the steam turbine system 14 to the gas treatment system 18 may include route criteria 244 including a change of the pipe size of the particular pipe based on pressure, flowrate, velocity, pressure drop, and the like. In this manner, the piping design system 200 may determine route criteria 244 by separating the particular pipe into one or more additional pipe routes to establish route criteria 244 with one pipe schedule and/or one pipe size. It should be noted that in some instances, the piping design system 200 may generate the 3-D pipe layout 242 using route criteria 244 with more than one pipe size and/or pipe schedule per the one or more pipes.

In certain embodiments, the boundaries of the work volume (e.g., 3-D volume) may be provided based on a build area of the 3-D pipe layout 242. For example, the 3-D pipe layout 242 may be developed for implementation in a real-world pipe layout. As such, the work volume boundaries may be defined based on a footprint of the 3-D pipe layout 242, a size of the industrial plant 10, a size of a portion of the industrial plant, a size of a room, housing, or enclosure, a size of a mobile power plant carrier (e.g., an open or enclosed trailer), and the like. In this manner, the work volume may define the outer bounds of the 3-D pipe layout 242.

In some embodiments, the one or more predefined "limiting zones" may include one or more restricted areas, one or more locations of a stored vector routes, one or more prioritized pipes, one or more safety zones, and/or the like. In some instances, the restricted areas may include stairwells, walkways, non-pipe portions of the industrial plant 10 and the like. For example, the route criteria 244 may include limiting zones that include the components of the gas turbine system 12. In some embodiments, the limiting zones may include the prioritized pipe of the industrial plant 10. For example, a high-pressure fuel gas pipe may be prioritized within the route criteria 244 generating the limiting zone such that the piping design system 200 designs the location of one or more additional pipes around the location of the high-pressure fuel gas pipe.

In some instances, the one or more safety zones may include clearance requirements (e.g., door clearances, stairwell clearances, vent clearances, and the like). In some embodiments, the safety zones may include parameters (e.g., incline, slope, drain connections, space around steam lines, and the like) that may be dictated by piping codes and/or standards of industry. In some embodiments, the one or more locations of the stored vector routes may include locations of pipes assigned by a vector routing model of the piping design system 200 (e.g., a computer-based model configured to generate vector routing).

With this in mind, the computer-implemented method 240 may proceed to block 246. At block 246, the vector routing model may be initiated. The vector routing model may be a trained model using artificial intelligence. In some instances, the vector routing model is trained using a scale increasing model discussed further herein. Initiation of the vector routing model at block 246 may include analysis of the route criteria 244 to determine the start point. The start point may be defined as an initial position of a vector route of the vector routing model. In certain embodiments, the vector routing model of the piping design system 200 may select the start point of a first pipe of the 3-D pipe layout 242. In some instances, the first pipe of the 3-D pipe layout 242 may be selected by the vector routing model randomly, based on training by the scale increasing model, based on pipe prioritization, a user input, and/or a combination (e.g., weighted value) of thereof.

At block 248, the computer-implemented method 240 generates one or more vector routes. The vector routes may be generated by the vector routing model based on the route criteria 244 and/or an identified number of pipes. The vector routes may include generation of a vector. A first end of the vector may start at the start point of the route criteria 244 of a pipe corresponding to the vector. In some instances, the vector is random where "random" is defined as having a direction of the vector that is mathematically random (e.g., consisting of random variables of a normal distribution). The vector routing model, which may be stored in the memory 206 of the computing system 202 of the piping design system 200, may perform an iterative process (e.g., iterative machine learning process) to determine the one or more vector routes of each of the identified number of pipes. For example, the route criteria 244 may include start points and end points for a number of pipes (e.g., 5 pipes, 10 pipes, 50 pipes, 100 pipes, etc.). As such, the vector routing model may determine a number of vector routes corresponding to the number of pipes. Each of the vector routes may include one or more vectors based on the route criteria 244.

For example, a first vector may be generated corresponding to a first portion of a first pipe. Further, the first vector may begin at the start point of the first pipe. The vector routing model may monitor the direction of the first vector and determine an intersection of the first vector with the limiting zone and/or the work volume. In some instances, the intersection of the first vector is detected by the vector routing model. As such, a break point is generated at the intersection. A second vector may be generated at the break point of the first vector. In this manner, the second vector represents a second portion of the first pipe. The direction of the second vector may be random. The direction of the second vector and an additional intersection of the second vector with a limiting zone of the stored vector route and/or additional limiting zones may be determined by the piping design system 200. The limiting zone of the stored vector route may include limiting zones generated by the vector routing model based on one or more locations of the first portion of the first pipe and/or the one or more pipes of the 3-D pipe layout, discussed further herein. The vector routing model may iteratively detect intersections of one or more vectors (e.g., the first vector, the second vector, and so forth) until the vector reaches the end point as defined by the route criteria 244. In this manner, the piping design system 200 may terminate the vector routing model at the intersection of the vector with the end point and generate a vector route corresponding to the first pipe.

At block 250, the vector routing model may evaluate one or more vector routes generated at block 248. Evaluation of the vector routes may include optimization of a route solution based on the vector routes. Optimization may be based on an optimization parameter that may be defined based on a predetermined value that assigns a priority (e.g., a weighted value) to one or more particular factors regarding pipe selection. For example, the predetermined value may be selected by a user to be a minimum and/or maximum weighted value based on the priority of the particular factors regarding pipe selection. In some embodiments, the particular factors regarding pipe selection may include a material cost, the pipe size, a distance between the start point and the end point of the pipes, a number of break points generated, and the like. The particular factors may be assigned the weighted value by the user to provide optimization guidelines for the vector routing model. For example, the optimization parameter may be based on the material cost of the vector routes proposed for the 3-D pipe layout 242. In this manner, the vector routing model may iteratively generate the vector routes of the number of pipes included in the 3-D pipe layout 242 to minimize the material cost of the route solution by reaching a minimum weighted value. In some instances, the vector routing model may generate the vector routes in any suitable order to optimize the route solution.

For example, the vector routing model may select the route solution that includes generating the vector route of a fourth pipe of the number of pipes included in the 3-D pipe layout 242 prior to generation of the vector route of a third pipe in instances in which the material cost is minimized. The fourth pipe may be prioritized due to cost associated with a build material of the fourth pipe (e.g., stainless steel) when compared to the third pipe (e.g., carbon steel). In some instances, the route solution in which the fourth pipe has a shorter distance from the start point to the end point may minimize costs associated with building the 3-D pipe layout 242 after optimization. As such, the vector route of the third pipe may be generated after the vector route of the fourth pipe.

In certain embodiments, the vector route solution may use AI algorithms based on the scale increasing model to optimize the route solution. For example, the distance between the start point and the end point of the pipes may be included as the weighted value in the optimization parameter. For example, the vector routing model of the piping design system 200 may prioritize the distance between the start point and the end point of the pipes included in the 3-D pipe layout 242 and minimize distances between the start point and end point to generate compact, efficient, and/or cost-effective route solutions. In some instances, one or more additional factors are considered during optimization of the route solution. The additional factors may include a pressure, an angle, a flow, a temperature, physical or chemical properties of the fluid to be conveyed through the pipe, and the like of pipes included in the 3-D pipe layout 242. In this manner, optimization of the route solution may be based on complex interactions of the vector routes included in the 3-D pipe layout 242. In some instances, optimization of the route solution is terminated by the piping design system 200 after a predetermined number of iterations (e.g., 1000 iterations, 10,000 iterations, 100,000 iterations, etc.). It should be noted that, in some instances, optimization of the route solution may not be required, and the vector routing model may output the 3-D pipe layout 242 without consideration of the optimization parameter. With this in mind, the computer-implemented method 240 outputs the 3-D pipe layout 242. The 3-D pipe layout 242 may be transmitted to an external platform for display via the user interface 208 of the piping design system 200.

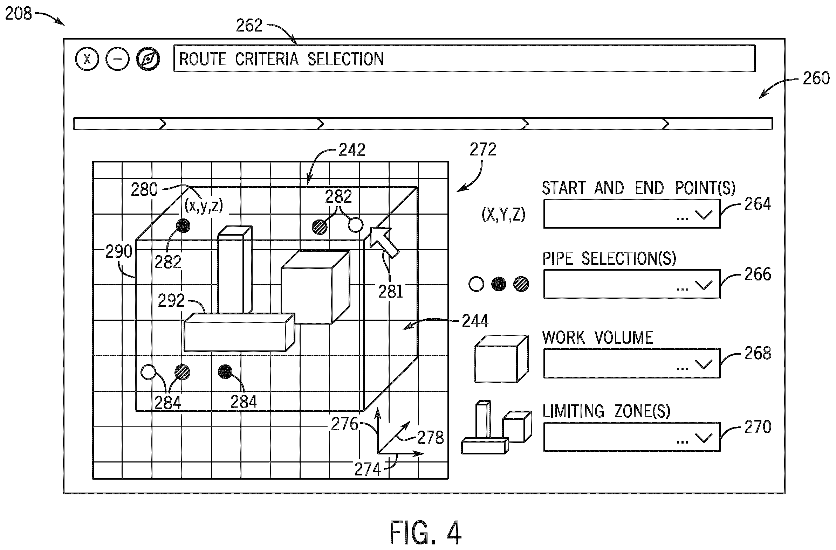

With this in mind, FIG. 4 is an embodiment of a user interface 208 of the piping design system 200, wherein the user interface 208 is disposed on an electronic device (e.g., computer display). The user interface 208 may display a screen 260 having a route criteria selection dashboard 262. The route criteria selection dashboard 262 may include various widgets (e.g., user interface widgets) prompting the user for inputs, providing notifications, outputting the route criteria 244, and the like. For example, the various widgets may include a start and end point widget 264, a pipe selection widget 266, a work volume widget 268, a limiting zone widget 270, and the like. The user interface 208 may display a 3-D route map 272 that may include one or more route criteria 244 of the 3-D pipe layout 242. The user may also submit weighted values associated with the optimization parameter and/or perform other functions related to operation of the vector routing model of the piping design system 200 via the user interface 208.

It should be recognized that while the illustrated embodiment of the route criteria selection dashboard 262 includes the start and end point widget 264, the pipe selection widget 266, the work volume widget 268, and the limiting zone widget 270 on the same screen 260, the user interface 208 may display each of these widgets on separate screens of the route criteria selection dashboard 262 and/or may allow a user to select which widgets will be shown, the placement of such widgets, and so forth. Additionally, in certain embodiments, one or more conditions or rules may be created or parameterized by the user to control when and/or where a widget is displayed, such as prompting display or updating of a widget in response to updated data monitored by the widget (e.g., display of a widget or placement of the widget may be updated in response the data conveyed by the widget changing or being updated). Additionally, or alternatively, the screen 260 via route criteria selection dashboard 262, may display any combination of the start and end point widget 264, the pipe selection widget 266, the work volume widget 268, and the limiting zone widget 270.

In some embodiments, the 3-D route map 272 includes a three-dimensional coordinate system with an x-axis 274, a y-axis 276, and a z-axis 278. The 3-D route map 272 of the user interface 208 may allow the user to input one or more coordinates 280 corresponding to the start and/or the end point of the vector route via the start and end point widget 264. For example, the user may input the coordinates 280 into the start and end point widget 264, thereby providing the 3-D route map 272 with a start point 282 and an end point 284 associated with a particular vector route of a pipe. In some instances, various start points 282 and various end points 284 may be input into the user interface 208. In this manner, the piping design system 200 may use the start point 282 and the end point 284 during 3-D pipe layout 242 generation by the vector routing model. Additionally, and/or alternatively, the user may use a selection tool 281 to select the coordinates 280 associated with the start and end point widget 264.

In some embodiments, the user may input information relating to the pipe selection (e.g., pipe size, pipe schedule, pipe material, and the like) via the pipe selection widget 266. The pipe selection may include any suitable combination of pipe size (e.g., pipe diameter and/or pipe length), pipe schedule (e.g., 5, 20, 40, 120, 160, and the like), pipe material (e.g., plastic or metallic materials, such as carbon steel, stainless steel, cast iron, copper tubing, etc.), and/or additional properties associated with pipes included in the 3-D pipe layout 242. In this manner, the vector routing model may include complex combinations of pipe selections that may be assigned weights of different values to determine the optimization parameter used to optimize the 3-D pipe layout 242 output of the vector routing model of the piping design system 200.

In certain embodiments, the user may input and/or define the geometric regions associated with the work volume 290 via the work volume widget 268. The work volume 290 may be defined based on a build area of the 3-D pipe layout 242. For example, the 3-D pipe layout 242 may be defined based on constraints of a size of the industrial plant 10 and/or any geometric bounds defined by the user. In this manner, the work volume 290 may display on the 3-D route map 272 to define one or more outer bounds in which the 3-D pipe layout 242 may be confined. In some instances, the work volume 290 may include one or more limiting zones 292 that further confine locations of the vector routes of the 3-D pipe layout 242.

With this in mind, in some embodiments, the user may input and/or define geometric regions associated with the one or more limiting zones 292 via the limiting zones widget 270. The limiting zones 292 may be input into the user interface 208 by the user to provide the vector routing model with one or more bounds (e.g., areas free of pipe routing). For example, the limiting zones 292 may include regions of the industrial plant 10 that may be previously designed and/or built within the work volume 290. In some instances, the limiting zones 292 may include gas turbines, fans, coolers, stairwells, walkways, and the like. It should be noted that the user may input data from one or more additional locations into the route criteria selection dashboard 262 from one or more databases relating to information used to design, implement, and/or build the industrial plant 10. The databases may be stored in the memory 206 of the computing system 202 or may be stored remotely (e.g., on a remote server accessible via the network interface 214 of the computing system 202).

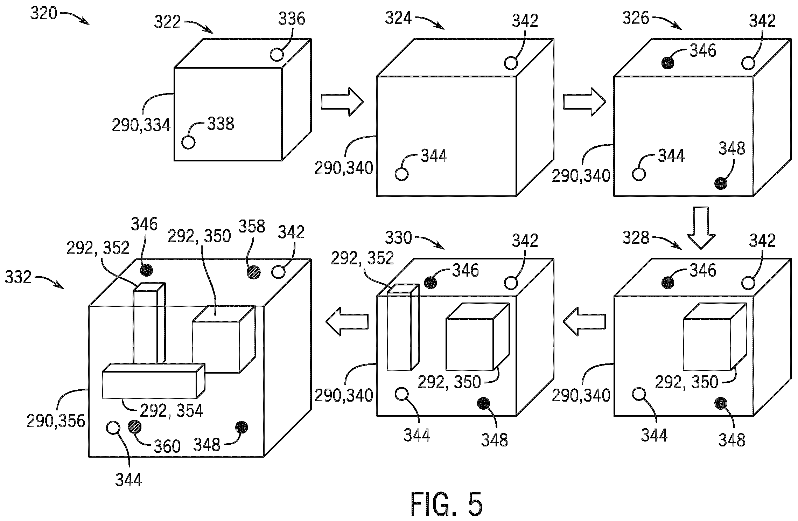

FIG. 5 is an illustrative embodiment of a scale increasing model 320 that may be used to train the vector routing model of the piping design system 200. The scale increasing model 320 may be an artificial intelligence (AI) model (e.g., neural network, machine learning, and the like) that may train the vector routing model for use in outputting 3-D pipe layouts. In some embodiments, the scale increasing model 320 may generate various iterations of the 3-D pipe layout 242 based on training data. The various iterations may include a first iteration 322, a second iteration 324, a third iteration 326, a fourth iteration 328, a fifth iteration 330, a sixth iteration 332, and so forth up to any number of iterations (e.g., equal to or greater than 100, 1,000, or 10,000 iterations). It should be noted that the various iterations shown in FIG. 5 illustrate one non-limiting embodiment of the scale increasing model 320. In some instances, the scale increasing model 320 may include additional iterations and/or may use training data to input the route criteria 244 within the various iterations to train the scale increasing model 320.

In certain embodiments, the route criteria 244 used by the scale increasing model 320 during training may include the work volume 290, one or more start points, one or more end points, one or more limiting zones, and/or additional criteria. In general, the scale increasing model 320 may be trained by introducing a first portion of the route criteria 244, changing the first portion of the route criteria 244 (e.g., adding criteria, removing criteria, and the like). In this manner, the scale increasing model 320 may be trained to increase complexity and/or establish relationships between the route criteria 244. For example, the first iteration 322 of the scale increasing model 320 may include one or more route criteria 244 such as a first work volume 334 (e.g., a work volume of a particular size), a first start point 336, and/or a first end point 338. The one or more route criteria of the first iteration 322 may be defined as the training data of the first iteration 322 of the scale increasing model 320. The scale increasing model 320 may train on the training data of the first iteration 322 and determine a priority threshold based on a value weight assigned to the training data of the first iteration 322. The value weight assigned to the training data may be input by the user and/or established by the scale increasing model 320. For example, a higher value weight may be assigned to the work volume 290, 334 of the 3-D pipe layout 242 to ensure that the scale increasing model 320 outputs 3-D pipe layouts in which the vector route is confined to the work volume 290, 334. In this manner, the scale increasing model may output the 3-D pipe layout 242 corresponding to the first iteration 322 after determination of the priority threshold.

In some embodiments, the second iteration 324 of the scale increasing model 320 may alter the work volume 290. For example, the second iteration 324 includes route criteria 244 with a second work volume 340, larger than the first work volume 334. Additionally, and/or alternatively, the second iteration may include a second start point 342 and/or a second end point 344. In this manner, the scale increasing model 320 may train based on altered training data (e.g., route requirements), determine the priority threshold, and output the 3-D pipe layout 242. The scale increasing model 320 may proceed to the third iteration 326. The third iteration 326 of the scale increasing model 320 may include a second (additional) vector route that may include a second start point 346, a second end point 348, and a particular pipe selection (e.g., pipe size, pipe schedule, pipe material). The pipe selection of the second vector route may or may not differ from the pipe selection of the vector route of the first iteration 322 and/or the second iteration 324.

In the fourth iteration, a limiting zone 292, 350 may be added to the training data of the scale increasing model 320. For example, a geometric region of a gas turbine may be included within the working volume 290, 340 to train the scale increasing model 320 to output 3-D route layouts that avoid vector route collisions with the limiting zone 292, 350. Further, in the fifth iteration, a second limiting zone 292, 252 may be added to the scale increasing model 320. The second limiting zone 292, 252 may correspond to a stairwell within the working volume 290, 340 of the industrial plant 10 being modeled. It should be noted that the route criteria 244 of the fifth iteration 330 may also include the route criteria 244 of the fourth iteration 328. The sixth iteration 332 of the scale increasing model 320 may include a third limiting zone 292, 354. The third limiting zone may correspond to a walkway. Additionally, the sixth iteration 332 may include a third working volume 290, 356. As shown, the third working volume 290, 356 may be larger than the first working volume 290, 334 and/or the second working volume 290, 340.

In certain embodiments, the sixth iteration 332 of the scale increasing model 320 may include a third start point 358 and/or a third end point 360 corresponding to a third vector route. In this manner, the scale increasing model 320 may determine the priority threshold of each route criteria that may be included in the sixth iteration 332 and output the 3-D pipe layout 242. For example, the third working volume 290, 356 may be assigned a level of priority above a priority threshold. Stated differently, the priority threshold may require that the third working volume 290, 356 may be satisfied when the vector routes of the sixth iteration 332 of the scale increasing model 320 are confined within bounds defined by the third working volume 290, 356.

In some embodiments, the scale increasing model may determine a validity of the scale increasing model 320 based on a scoring metric when the priority threshold is satisfied. The scoring metric may be used to monitor data drift and/or monitor performance of the scale increasing model 320. In some instances, the scoring metric may include one or more performance metrics based on a ground truth of an optimized 3-D pipe layout 242. The performance metrics may include mean absolute error, mean squared error, root mean squared error, R-squared, and the like. Additionally, and/or alternatively, the scoring metric may include one or more blind performance metrics without the ground truth of the optimized 3-D pipe layout 242. The blind performance metrics may include Bayesian statistical analysis metrics (e.g., confidence-based performance estimation, confusion matrix, and the like). In this manner, the scale increasing model 320 may be determined by the piping design system 200 to satisfy the scoring metric and may output the 3-D pipe layout 242.

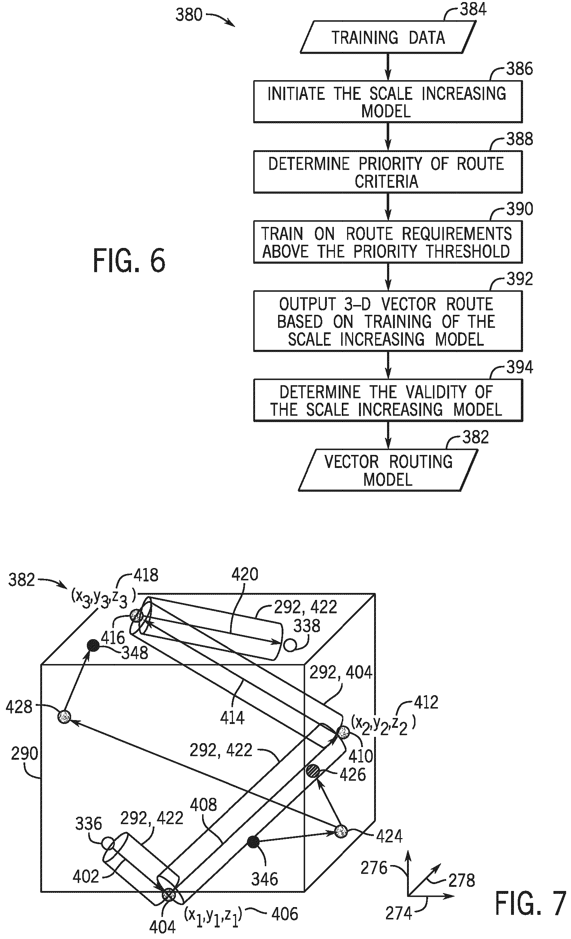

Referring now to FIG. 6, the piping design system 200 may perform a computer-implemented method or process 380 for generating a vector routing model 382. The process 380 may be performed by processing circuitry or controller disclosed above with reference to FIG. 2 or any other suitable computing device(s) or controller(s). Furthermore, the blocks of the process 380 may be performed in the order disclosed herein or in any suitable order. For example, certain blocks of the process 380 may be performed concurrently. In addition, in certain embodiments, at least one of the blocks of the process 380 may be omitted. The process 380 receives training data 384 based on one or more route criteria 244. At block 386, the piping design system 200 initiates the scale increasing model 320 to generate the 3-D pipe layout 242 based on the training data 384. At block 388, the priority threshold is determined based on the value weight assigned to the training data. Further, at block 390, the piping design system 200 trains the scale increasing model 320 using the training data above the priority threshold. In this manner, various iterations of the scale increasing model 320 may be performed as described herein with reference to FIG. 5 before the piping design system 200 outputs (at block 392) a 3-D vector route based on the training of the scale increasing model 320. At block 394, the validity of the scale increasing model 320 is determined. In instances, in which the scale increasing model 320 may be valid, the vector routing model 382 is output. The vector routing model 382 is a trained model and may be implemented to determine 3-D pipe layouts for one or more real-world piping layouts.

FIG. 7 is an illustrative embodiment of the vector routing model 382 determining the real-world piping layouts based on route criteria 244. To aid the discussion, a set of axes will be referenced including a 3-D coordinate system with an x-axis 274, a y-axis 276, and a z-axis 278. In some embodiments, the vector routing model 382 includes route criteria 244 that may include the work volume 290, the first start point 336, the first end point 338, the second start point 346, and the second end point 348. It should be noted that FIG. 7 is one non-limiting example, and more or less route criteria 244 may be included in the vector routing model 382.

In certain embodiments, the vector routing model 382 of the piping design system 200 may identify a number of pipes based on the route criteria 244. In this manner, the identitfied number of pipes may include the number of pipes for which the vector routing model 382 may determine a real-world pipe route. Further, the vector routing model 382 may analyze the route criteria 244 to determine a start point defined as an initial position of a first vector route. In the illustrated embodiment, the start point 336 may be selected as the start point of the first vector route corresponding to a first pipe. As such, a first vector 402 may be generated. The first vector 402 may intersect with the work volume 290 and generate a first break point 404. The first break point 404 may be assigned a first coordinate 406 (e.g., x₁, y₁, z₁), as shown, that may correspond to a location of the first break point 404. In this manner, the vector routing model 382 may generate a second vector 408, originating from the first break point 404. The second vector 408 may intersect with the work volume 290 and generate a second break point 410. As such, a second coordinate 412 (e.g., x₂, y₂, z₂) may be assigned to the second break point 410. Further, a third vector 414 may be generated, originating from the second break point 410. The third vector 414 may intersect with the work volume 290 and generate a third break point 416. A third coordinate 418 (e.g., x₃, y₃, z₃) may be assigned corresponding to a location of the third break point 416. A fourth vector 420 may be generated by the vector routing model 382, originating from the third break point 416. The fourth vector 420 may intersect with the end point 338. The vector routing model 382 may terminate generation of one or more additional vectors and output the first vector route. The first vector route may comprise the first vector 402, the second vector 408, the third vector 414, and the fourth vector 420.

In certain embodiments, the vector routing model 382 may store the vector route based on reaching the end point 338. The vector route may be stored and analyzed during optimization of the route solutions and/or queried by the user. In some instances, a limiting zone 292, 422 (e.g., a pipe limiting zone) is formed based on a position of the vector route (e.g., stored vector route). For example, a predetermined diameter may be formed around the vector route in regards to the 3-D axis of the vector routing model 382. In this manner, the limiting zone 422 may ensure concurrently and/or subsequently generated vector routes may not occupy the position of the stored vector route. As such, a number of limiting zones may increase as the vector routing model 382 generates vector routes for each of the number of identified pipes. It should be noted that, in some embodiments, the vector routing model 382 may re-evaluate vector routes of one or more of the identified pipes to optimize the route solution before and/or after outputting the 3-D pipe layout 242.

In some embodiments, the vector routing model 382 may generate a second vector route. The start point of the second vector route may be the second start point 346. A first vector of the second vector route may originate from the second start point 346 and intersect with the work volume 290 and generate a first break point 424. As such, the vector routing model 382 may generate a second vector that may intersect with the limiting zone 292, 422 of the first vector route at a particular coordinate 426. In this manner, the vector routing model 382 may return to the first break point 424 and may generate a third vector. Further, the third vector may originate from the first break point 424, extend in a different direction from the second vector, and intersect with the work volume 290 in a different location, thereby generating a second break point 428 of the second vector route. Finally, a fourth vector may be generated from the second break point 428 and may intersect with the end point 348. Intersection of the second vector route with the end point 348 may terminate generation of additional vectors and output the second vector route (e.g., first vector, third vector, and fourth vector) corresponding to a second pipe. In certain embodiments, the vector routing model 382 may continue to generate vector routes for each identified number of pipes, optimize the route solution based on the optimization parameter, and output the 3-D dimensional pipe layout of all pipes to the user interface 208.

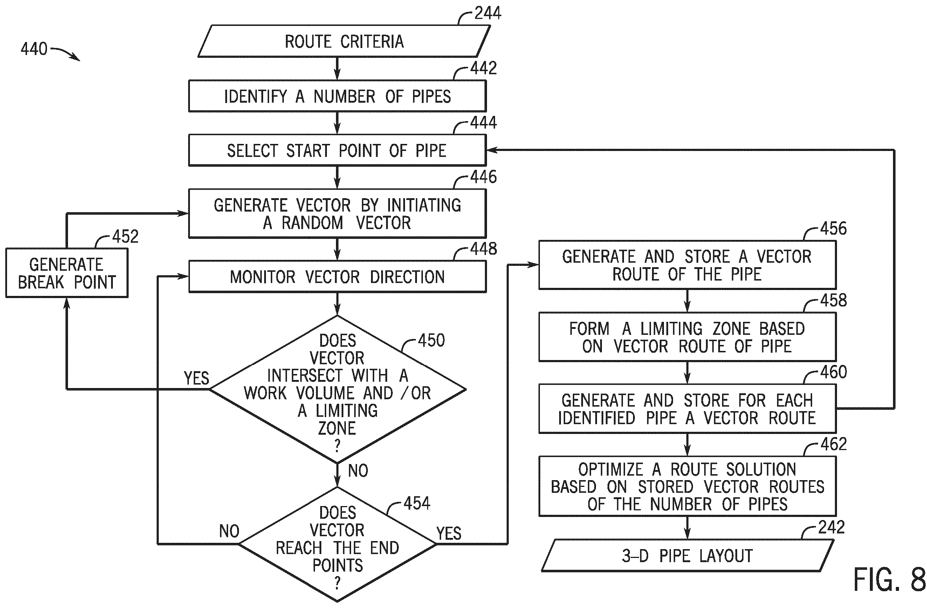

FIG. 8 is a flow diagram of a computer-implemented method or process 440 of the vector routing model 382 of the piping design system 200 to output the 3-D pipe layout 242. The vector routing model 382 receives the route criteria 244. At block 442, the vector routing model 382 identifies the number of pipes based on the route criteria 244. At block 444, the vector routing model 382 selects a start point (e.g., 336, FIG. 7) for at least one pipe based on analyzing the route criteria 244. Further, at block 446, the process 440 generates a vector. The vector may be generated by initiating a random vector from the start point. At block 448, the vector routing model 382 monitors a direction of the vector. At block 450, the vector routing model 382 determines if the vector intersects with a work volume boundary and/or a limiting zone (e.g., a pipe limiting zone, an additional limiting zone). When the vector intersects with the work volume boundary and/or the limiting zone, and the vector routing model 382 may generate a break point at block 452. In this manner, the vector routing model 382 may generate an additional vector at block 446 and proceed to block 450 until the vector and/or the additional vector does not intersect with the work volume boundary and/or the limiting zone.

In some embodiments, an intersection is not formed with the work volume boundary and/or the limiting zone, and the vector routing model 382 determines if the vector reaches an end point at block 454. In some instances, the vector may not reach the end point and returns to block 448. Further, in some instances there may be one or more end points. In certain embodiments, the vector routing model 382 determines that the vector reaches the end point and generates and stores a vector route of a corresponding pipe of the identified number of pipes at block 456. At block 458, the process 440 forms a limiting zone (e.g., a pipe limiting zone) based on the generated vector route as described above in reference to FIG. 7. Further, at block 460 the vector routing model 382 performs an iterative process by returning to block 444 of the process 440. That is, the iterative process includes generating and storing vector routes for each pipe of the identified number of pipes. As such, a plurality of vector routes may be generated associated with each pipe of the 3-D pipe layout. In certain embodiments, the iterative process may conclude once vector routes for reach pipe of the identified number of pipes is generated and stored.

At block 462, the vector routing model 382 optimizes a route solution based on the vector routes stored for each of the identified pipes of the number of pipes. Optimization is based on the optimization parameter disclosed herein. The vector routing model 382 may output the 3-D pipe layout 242 for the number of pipes (e.g., the number of pipes in industrial plant 10). In some embodiments, the 3-D pipe layout 242 is transmitted to an external platform for display on the user interface 208. It should be noted the blocks of the process 440 may be performed in the order disclosed herein or in any suitable order. For example, certain blocks of the process may be performed concurrently. In addition, in certain embodiments, at least one of the blocks of the process 440 may be omitted.

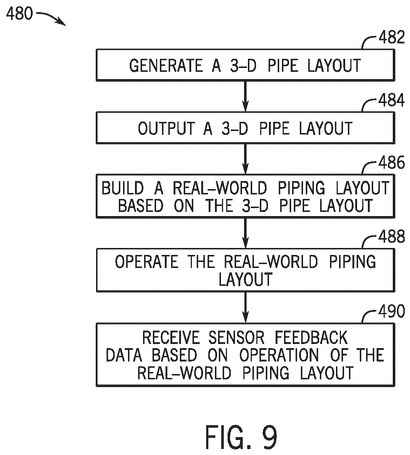

FIG. 9 is a flow diagram illustrating an embodiment of a computer-implemented method or process 480 of the piping design system 200. The process 480 includes at block 482 generating the 3-D pipe layout 242. The 3-D pipe layout 242 may be generated by the vector routing model 382 of the piping design system 200, as discussed above. The 3-D pipe layout 242 may include a number of vector routes corresponding to a number of pipes to be included in the industrial plant 10. At block 484, the piping design system 200 outputs the 3-D pipe layout 242. The 3-D pipe layout 242 may be output on the user interface 208 to allow the user to access the 3-D pipe layout 242 as generated by the vector routing model 382. In some instances, the 3-D pipe layout 242 may provide a bill of materials that may be required to build a real-world piping layout.

At block 486, the real-world piping layout may be built based on the 3-D pipe layout 242. Building of the real-world piping layout may include installation of the number of pipes within the industrial plant 10. In this manner, the vector routes of the 3-D pipe layout 242 may provide piping routes of the real-world piping layout. The real-world piping layout may be based upon the route criteria 244 provided to the vector routing model 382 during generation of the 3-D pipe layout 242 at block 482. For example, the work volume provided to the 3-D pipe layout 242 may include a real-world work volume of the industrial plant 10. As such, the real-world piping layout may be constructed including piping routes constrained within the real-world work volume as provided by the piping design system 200.

At block 488, the piping design system 200 may operate the real-world piping layout and control various parameters of fluid flows (e.g., flow rates, temperatures, pressures, fluid compositions, etc.) through the real-world piping layout, including control of various equipment coupled to the real-world piping layout. In some embodiments, operation of the piping system may include operation of the gas turbine system 12, the steam turbine system 14, the HRSG 16, the gas treatment system 18, and/or additional systems included in the industrial plant 10. In this manner, the real-world piping design system 200 may provide connection of one or more portions of the industrial plant 10 with various systems. The real-world piping design system 200 may allow for streamlined, efficient, and/or compact implementation of the pipes needed to achieve operation of the industrial plant 10. Further, at block 490, the piping design system 200 may receive sensor feedback data from the sensors 128 of the industrial plant 10 (e.g., the real-world piping system). The sensors 128 are referenced herein regarding FIG. 1 and FIG. 2. The sensor feedback data may include information relating to an operational metric of the real-world piping system. In this manner, the piping design system 200 may analyze the sensor feedback data and update current and/or future 3-D pipe layouts based on the operational metric of the real-world piping system as provided by the sensor feedback data. Additionally, and/or alternatively, the user may provide the piping design system 200 with feedback regarding operation of the real-world piping system. The piping design system 200 may provide the vector routing model 382 with updated training data based on the sensor feedback data and/or the user feedback in an iterative way to train the vector routing model 382 to generate 3-D pipe layouts for implementation in industrial plants 10.

Technical effects of the disclosed embodiments include use of artificial intelligence to generate 3-D piping layouts for an industrial plant 10. The artificial intelligence may consider various parameters and weighted values for those parameters when generating the 3-D piping layouts. The 3-D piping layouts may result in reduced construction costs and improved efficiency and performance in the construction and operation of the industrial plant 10. Additionally, the 3-D piping layouts may be used by control systems (e.g., controller 22) to improve control of the industrial plant 10, such as by improving efficiency, response times, etc. of the controller 22. The artificial intelligence used to generate the 3-D piping layouts may considered sensor feedback, user feedback (e.g., operator feedback, maintenance technician feedback, customer feedback, etc.), control system feedback, or any combination thereof, from the particular industrial plant 10 or multiple different industrial plants 10, thereby helping to further improve the 3-D piping layouts.

The subject matter described in detail above may be defined by one or more clauses, as set forth below.

A system for generation of a three-dimensional (3-D) piping route, the system including a processing circuitry and a memory, accessible by the processing circuitry, the memory storing instructions that, when executed by the processing circuitry cause the processing circuitry to perform operation including: receiving one or more route criteria and identifying a number of pipes, wherein the number of pipes is based on the one or more route criteria; generating a vector route; storing the vector route, wherein the vector route is stored based on one or more route criteria; generating a limiting zone, wherein the limiting zone is formed based on a position of the stored vector route; performing an iterative process, wherein the iterative process determines one or more vector routes for each of the identified number of pipes; optimizing a route solution based on the one or more vector routes, wherein optimization is based on an optimization parameter; and outputting a three-dimensional pipe layout, wherein the three-dimensional pipe layout is transmitted to an external platform for display via a user interface.

The system of the preceding clause, wherein the processing circuitry performs operations comprising monitoring a vector direction of the vector route.

The system of any preceding clause, wherein the one or more route criteria comprises a start point, an end point, a pipe selection, a work volume boundary, one or more additional limiting zones, or a combination thereof.

The system of any preceding clause, wherein the pipe selection comprises a pipe size, a pipe schedule, a pipe material, or a combination of thereof.

The system of any preceding clause, wherein the processing circuitry performs operations including: generating a first vector, wherein generation of a first end of the first vector starts at the start point and wherein a direction of the first vector is random; monitoring a direction of the first vector; determining an intersection of the first vector with the limiting zone of the stored vector route, the one or more additional limiting zones, the work volume boundary, and/or the end point; and generating a break point at the intersection of the first vector with the limiting zone of the stored vector route, the one or more additional limiting zones, and/or the work volume boundary.

The system of any preceding clause, wherein the processing circuitry performs operations including: generating a second vector, wherein generation of a first end of the second vector starts at the break point and wherein a direction of the second vector is random and monitoring a direction of the second vector; determining an intersection of the second vector with the limiting zone of the stored vector route, the one or more additional limiting zones, the work volume boundary, and/or the end point; generating a second break point at the intersection of the second vector with the limiting zone of the stored vector route, the one or more additional limiting zones, and/or the work volume boundary; generating one or more additional vectors and/or one or more additional break points based on intersections of the one or more additional vectors with the one or more additional limiting zones, the work volume boundary, and/or the end point; and terminating generation of one or more additional vectors at the intersection of the one or more additional vectors with an end point and outputting a vector route of the one or more vector routes for each of the identified number of pipes.

The system of any preceding clause, wherein the processing circuitry performs operations including analyzing the one or more route criteria to determine a start point, wherein the start point is an initial position of a vector route; selecting the start point of a first pipe; and generating a vector, wherein generation of a first end of the vector starts at the start point and wherein a direction of the vector is random.

The system of any preceding clause, wherein the processing circuitry performs operations include operating a real-world piping layout constructed based on the three-dimensional pipe layout.

The system of any preceding clause, wherein the real-world piping layout includes one or more sensors; and wherein the one or more sensors provide sensor feedback data to the processing circuitry.

The system of any preceding clause, wherein the processing circuitry performs operations include initiating a scale increasing model, to generate the three-dimensional pipe layout based on training data; determining a priority threshold wherein the priority threshold is based on a value weight assigned to the training data, wherein the training data comprise one or more route criteria; training the scale increasing model using the training data above the priority threshold; outputting the three-dimensional pipe layout generated based on the training data above the priority threshold; determining a validity of the scale increasing model, wherein the validity is based on a scoring metric; and outputting a vector routing model, wherein the vector routing model is a trained model.

A method including generating a three-dimensional pipe layout via a vector routing model, outputting the three-dimensional pipe layout, and building a real-world piping layout based on the three-dimensional pipe layout.

The method of the preceding clause, comprises receiving sensor feedback data, based on building a first real-world piping layout; and updating the three-dimensional pipe layout based on the sensor feedback data.

The method of any preceding clause, wherein updating the three-dimensional pipe layout is an iterative process.

The method of any preceding clause wherein generating the three-dimensional pipe layout comprises receiving one or more route criteria and identifying a number of pipes, wherein the number of pipes is based on the one or more route criteria; performing an iterative process, wherein the iterative process determines one or more vector routes for each of the identified number of pipes; and outputting a three-dimensional pipe layout; wherein the three-dimensional pipe layout is transmitted to an external platform for display via a user interface.

The method of any preceding clause, wherein the user interface includes a 3-D route map and one or more user interface widgets.

A non-transitory, computer-readable storage medium, comprising processor-executable routines that, when executed by a processor, cause the processor to perform operations. The processor performs operations including receiving one or more route criteria, identifying a number of pipes, wherein the number of pipes is based on the one or more route criteria, initiating a vector routing model and generating a vector route formed by the vector routing model and configured to begin at a start point. The processor also performs operations including monitoring a vector direction of the vector route, wherein monitoring the vector direction includes determining an intersection of the vector route with a work volume boundary, a limiting zone, and/or a combination thereof, wherein the intersection generates a break point or an end point of the vector route, storing the vector route, wherein the vector route is stored based on reaching the end point, generating a limiting zone, wherein the limiting zone is formed based on a position of the stored vector route, performing an iterative process, wherein the iterative process determines one or more vector routes for each of the identified number of pipes, optimizing a route solution based on the one or more vector routes, wherein optimization is based on an optimization parameter, and outputting a three-dimensional pipe layout, wherein the three-dimensional pipe layout is transmitted to an external platform for display via a user interface.

The non-transitory, computer-readable storage medium of the preceding clause, wherein the one or more route criteria are a start point, an end point, a pipe selection, a work volume boundary, a limiting zone, or a combination thereof.

The non-transitory, computer-readable storage medium of any preceding clause, wherein the pipe selection comprises a pipe size, a pipe schedule, a pipe material, or a combination of thereof.

The non-transitory, computer-readable storage medium of any preceding clause, wherein receiving the one or more route criteria is based on an input received from the user interface.

The non-transitory, computer-readable storage medium of any preceding clause, wherein the processor performs operations comprising analyzing the one or more route criteria to determine the start point; wherein the start point is an initial position of a vector route, selecting the start point of a first pipe, and generating a vector, wherein generation of a first end of the vector starts at the start point and wherein a direction of the vector is random.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system for generation of a three-dimensional (3-D) piping route, the system comprising:
a processing circuitry (212); and
a memory (206), accessible by the processing circuitry (212), the memory (206) storing instructions that, when executed by the processing circuitry (212), cause the processing circuitry (212) to perform operations comprising:
receiving (244) one or more route criteria;
identifying (442) a number of pipes, wherein the number of pipes is based on the one or more route criteria;
generating (248, 456) a vector route;
storing (456) the vector route, wherein the vector route is stored based on the one or more route criteria;
generating (458) a limiting zone (292, 422), wherein the limiting zone (292, 422) is formed based on a position of the stored vector route;
performing an iterative process (460), wherein the iterative process determines one or more vector routes for each of the identified number of pipes;
optimizing a route solution (250, 462) based on the one or more vector routes, wherein optimization is based on an optimization parameter; and
outputting a three-dimensional pipe layout (242), wherein the three-dimensional pipe layout is transmitted to an external platform for display via a user interface (208).

2. The system of claim 1, wherein the memory (206) further stores instructions that, when executed by the processing circuitry (212), cause the processing circuitry (212) to perform operations comprising monitoring (448) a vector direction of the vector route.

3. The system of claim 1 or 2, wherein the one or more route criteria comprises a start point (282), an end point (284), a pipe selection, a work volume boundary, one or more additional limiting zones, or a combination thereof.

4. The system of claim 3, wherein the pipe selection comprises a pipe size, a pipe schedule, a pipe material, or a combination of thereof.

5. The system of claim 3 or 4, wherein the memory (206) further stores instructions that, when executed by the processing circuitry (212), cause the processing circuitry (212) to perform operations comprising:
generating a first vector (402), wherein generation of a first end of the first vector (402) starts at the start point (282) and wherein a direction of the first vector (402) is random;
monitoring a direction of the first vector (402);
determining an intersection of the first vector (402) with the limiting zone (292, 422) of the stored vector route, the one or more additional limiting zones, the work volume boundary, and/or the end point (284); and
generating a break point (404) at the intersection of the first vector (402) with the limiting zone (292, 422) of the stored vector route, the one or more additional limiting zones, and/or the work volume boundary.

6. The system, of claim 5, wherein the memory (206) further stores instructions that, when executed by the processing circuitry (212), cause the processing circuitry (212) to perform operations comprising:
generating a second vector (408), wherein generation of a first end of the second vector (408) starts at the break point (404) and wherein a direction of the second vector (408) is random;
monitoring a direction of the second vector (408);
determining an intersection of the second vector (408) with the limiting zone (292, 422) of the stored vector route, the one or more additional limiting zones, the work volume boundary, and/or the end point (284);
generating a second break point (410) at the intersection of the second vector (408) with the limiting zone (292, 422) of the stored vector route, the one or more additional limiting zones, and/or the work volume boundary;
generating one or more additional vectors (414, 420) and/or one or more additional break points (416) based on intersections of the one or more additional vectors with the one or more additional limiting zones, the work volume boundary, and/or the end point (284);
terminating generation of one or more additional vectors (414, 420) at the intersection of the one or more additional vectors (414, 420) with an end point (284); and
outputting a vector route of the one or more vector routes for each of the identified number of pipes.

7. The system of any preceding claim, wherein the memory (206) further stores instructions that, when executed by the processing circuitry (212), cause the processing circuitry (212) to perform operations comprising:
analyzing the one or more route criteria to determine a start point (282), wherein the start point (282) is an initial position of a vector route;
selecting the start point (282) of a first pipe; and
generating a vector, wherein generation of a first end of the vector starts at the start point (282) and wherein a direction of the vector is random.

8. The system of any preceding claim, wherein the memory (206) further stores instructions that, when executed by the processing circuitry (212), cause the processing circuitry (212) to perform operations comprising:
operating (488) a real-world piping layout constructed based on the three-dimensional pipe layout.

9. The system of claim 8, wherein the real-world piping layout includes one or more sensors, wherein the one or more sensors are configured to provide sensor feedback data to the processing circuitry (212).

10. The system of any preceding claim, wherein the memory (206) further stores instructions that, when executed by the processing circuitry (212), cause the processing circuitry (212) to perform operations comprising:
initiating (386) a scale increasing model to generate the three-dimensional pipe layout based on training data;
determining (388) a priority threshold wherein the priority threshold is based on a value weight assigned to the training data, wherein the training data comprises one or more route criteria;
training (390) the scale increasing model using the training data above the priority threshold;
outputting (392) the three-dimensional pipe layout generated based on the training data above the priority threshold;
determining (394) a validity of the scale increasing model, wherein the validity is based on a scoring metric; and
outputting a vector routing model (382), wherein the vector routing model is a trained model.

11. A method, comprising:
generating (482) a three-dimensional pipe layout via a vector routing model;
outputting (484) the three-dimensional pipe layout; and
building (486) a real-world piping layout based on the three-dimensional pipe layout.

12. The method of claim 11, comprising:
receiving (490) sensor feedback data, based on building a first real-world piping layout; and
updating the three-dimensional pipe layout based on the sensor feedback data.

13. The method of claim 12, wherein updating the three-dimensional pipe layout is an iterative process.

14. The method of any of claims 11 to 13, wherein the generating (482) the three-dimensional pipe layout comprises:
receiving (244) one or more route criteria;
identifying (442) a number of pipes, wherein the number of pipes is based on the one or more route criteria;
performing an iterative process (460), wherein the iterative process determines one or more vector routes for each of the identified number of pipes; and
outputting (242) a three-dimensional pipe layout, wherein the three-dimensional pipe layout is transmitted to an external platform for display via a user interface (208).

15. A non-transitory, computer-readable storage medium, comprising processor-executable routines that, when executed by a processor, cause the processor to perform operations comprising:
receiving (244) one or more route criteria;
identifying (442) a number of pipes, wherein the number of pipes is based on the one or more route criteria;
initiating (246) a vector routing model;
generating (248, 456) a vector route, wherein the vector route is formed by the vector routing model and is configured to begin at a start point (282);
monitoring (448) a vector direction of the vector route, wherein monitoring the vector direction includes determining an intersection of the vector route with a work volume boundary, a predefined limiting zone, and/or a combination thereof, wherein the intersection generates a break point or an end point (284) of the vector route;
storing (456) the vector route, wherein the vector route is stored based on reaching the end point (284);
generating (458) a limiting zone (292, 422), wherein the limiting zone (292, 422) is formed based on a position of the stored vector route;
performing an iterative process (460), wherein the iterative process determines one or more vector routes for each of the identified number of pipes;
optimizing (250, 462) a route solution based on the one or more vector routes, wherein optimization is based on an optimization parameter; and
outputting a three-dimensional pipe layout (242), wherein the three-dimensional pipe layout is transmitted to an external platform for display via a user interface (208).
